# FASCICULE DE BREVET EUROPEEN

(11) **EP 1 788 369 B1**
(45) Date de publication et mention de la délivrance du brevet: **26.09.2012**
(21) Numéro de dépôt: 06291770.3
(22) Date de dépôt: 15.11.2006
(51) Int. Cl.: G01K 1/02

(54) **Procédé et système de suivi automatique de l'évolution de la température d'un produit lors de traitements et de déplacements du produits d'un dispositif de traitement à un autre.**
Verfahren und System zur automatischen Überwachung der Temperaturentwicklung eines Produkts während der Bearbeitungs- und Verschiebevorgänge dieses Produkts von einer Bearbeitungsanlage zur anderen
Process and system for automatic tracking of the change in temperature of a product during treatment and movements of the product from one treatment device to another.

(30) Priorité: 16.11.2005 FR 0511624
(43) Date de publication de la demande: 23.05.2007
(73) Titulaire: Constructions Isothermiques Bontami - C.I.B., 02100 Saint-Quentin (FR)
(72) Inventeur: Covin, Frédéric, 02800 Vendeuil (FR)
(74) Mandataire: Bloch, Gérard

(56) Documents cités:
- WO-A-2005/017476
- US-B1- 6 817 757
- PATENT ABSTRACTS OF JAPAN vol. 2003, no. 12, 5 décembre 2003 (2003-12-05) -& JP 2005 087135 A (HITACHI PLANT ENG & CONSTR CO LTD), 7 avril 2005 (2005-04-07)

## Description

L'invention porte sur un procédé et un système de suivi automatique de l'évolution de la température d'un produit lors de traitements et de déplacements du produit d'un dispositif de traitement à un autre, et plus particulièrement sur le suivi automatique de la température d'un produit alimentaire dans la chaîne de sécurité sanitaire.

La réglementation concernant la chaîne de sécurité alimentaire, et notamment la traçabilité des produits est de plus en plus stricte.

En effet, dans les pays développés, n'ayant plus de souci quantitatif d'accès à la nourriture, la notion de sécurité alimentaire ne cesse de se développer afin d'éviter au maximum d'éventuels problèmes sanitaires dus à l'ingestion de nourriture impropre à la consommation.

Lors de cuissons, de mises ou maintiens en température, ou de refroidissements de produits alimentaires, il est, par exemple, obligatoire que la température des produits alimentaires ne se trouve pas dans un intervalle de températures, correspondant à un développement rapide de bactéries, plus longtemps qu'une durée déterminée par réglementation.

Généralement, L'intervalle de température correspondant à un développement rapide de bactéries est l'intervalle des températures comprises entre +10°C et +63°C. Lors de la cuisson ou de la mise en température d'un produit, la température du produit doit franchir cet intervalle de températures en moins d'une heure, et lors du refroidissement d'un produit, la température du produit doit franchir cet intervalle de températures en moins de deux heures.

Il existe des systèmes et des procédés de suivi de la température d'un produit durant une phase de traitement d'un produit, notamment d'un produit alimentaire. Cependant le suivi de température ne concerne qu'un appareil, par exemple un four de cuisson. Le respect de la chaîne du froid ou du chaud n'est alors pas garanti.

Le document WO 2005/017476 divulgue un procédé conforme au préambule de la revendication 1.

Un but de l'invention est d'améliorer la chaîne de sécurité alimentaire.

Aussi, selon un aspect de l'invention, il est proposé un procédé de suivi automatique de l'évolution de la température d'un produit lors de traitements et de déplacements du produit d'un dispositif de traitement à un autre. On adjoint au produit un dispositif de mesure de la température du produit pour un ensemble d'au moins deux traitements et des déplacements correspondants du produit, on enregistre des valeurs de mesures de la température du produit transmises par ondes radio par le dispositif de mesure de la température du produit, et on enregistre des instants correspondant à des valeurs enregistrées de mesures de la température du produit.

Il est alors possible de suivre la température d'un produit durant une suite de traitements et de déplacements d'un dispositif de traitement à un autre. Dans le cas d'un produit alimentaire, cela est très important pour obtenir une meilleure traçabilité de l'évolution temporelle de la température du produit alimentaire, et ainsi d'éviter des risques sanitaires.

Dans un mode de mise en oeuvre préféré, les valeurs de mesures de la température du produit sont délivrées par le dispositif de mesure de la température du produit sur requête ou automatiquement.

Le dispositif de mesure de la température, par exemple un capteur mesurant une température de surface du produit, ou une sonde mesurant une température au coeur du produit, peut délivrer en sortie une valeur de température du produit soit de manière automatique, soit sur requête, par exemple sur une requête émanant d'une plate-forme de commande.

Dans un mode de mise en oeuvre avantageux, on détermine un instant d'une valeur de mesure de la température du produit, et on mémorise la valeur de la mesure de la température du produit et ledit instant déterminé correspondant.

On affecte un instant, par exemple la date et l'horaire d'une mesure, à la mesure, et on mémorise ces informations de manière à ce qu'elles soient associées. L'ensemble du relevé de ces informations permet ensuite d'avoir un suivi temporel précis de la température du produit au cours de ses traitements et déplacements.

Selon un autre aspect de l'invention, il est également proposé un système de suivi automatique de l'évolution de la température d'un produit lors de traitements et de déplacements du produit d'un dispositif de traitement à un autre, comprenant un dispositif de mesure de la température du produit adjoint au produit pour un ensemble d'au moins deux traitements et des déplacements correspondants du produit. Le dispositif de mesure de la température du produit comprend des moyens de transmission radio de valeurs de mesures de la température du produit.

Les moyens de transmission radio permettent effectivement d'avoir un suivi continu de la température du produit, car il n'est pas nécessaire, par exemple lors d'un déplacement du produit d'un dispositif de traitement à un autre, de retirer du produit le dispositif de mesure de la température du produit à cause de liaisons filaires, et de le remettre plus tard. Ceci entraînerait en outre de nombreuses manipulations manuelles, qui pourraient être sources de problèmes du suivi automatique de la température du produit.

Dans un mode de réalisation préféré, les moyens de transmission radio sont adaptés pour transmettre des valeurs de mesures de la température du produit, de leur propre initiative, ou sur requête externe, et le système comprend une plate-forme de traitement des données transmises par un ou plusieurs dispositifs de mesures de la température d'un produit respectif.

Dans un mode de réalisation avantageux, le système comprend des premiers moyens de détermination adaptés pour déterminer un instant d'une valeur de mesure de la température d'un produit, et des moyens de mémorisation adaptés pour mémoriser des valeurs de mesures de la température du produit et pour mémoriser les instants respectifs des valeurs de mesures de la température du produit.

Par exemple, le système comprend une pluralité de dispositifs de mesure de la température respectivement adjoints à un produit, et la plate-forme de traitement est adaptée pour recevoir et traiter des valeurs de températures transmises par la pluralité de dispositifs de mesure de température. Les premiers moyens de détermination sont adaptés pour reconnaître en outre un identifiant du dispositif ayant mesuré une valeur de température d'un produit, et les moyens de mémorisation sont adaptés pour mémoriser en outre ledit identifiant respectif du dispositif ayant mesuré une valeur de la température dudit produit.

Le système permet de suivre l'évolution simultanée de la température de plusieurs produits. Le système est capable de déterminer un identifiant du dispositif de mesure effectuant une mesure de température. Il est par exemple possible de joindre à l'information de mesure de température fournie par un dispositif de mesure, une information identifiant le dispositif ayant effectué cette mesure.

Dans un mode de réalisation préféré, le système comprend des moyens d'identification pour associer un identifiant d'un produit à un identifiant d'un dispositif de mesure de température adjoint à un produit.

Il est alors possible, à n'importe quel moment, et non forcément en début de la succession de traitements et déplacements d'un produit, d'identifier le produit auquel est adjoint un dispositif de mesure de la température du produit. L'identifiant du produit est, par exemple, son nom.

Avantageusement, le système comprend des deuxièmes moyens de détermination adaptés pour déterminer, pour un dispositif de mesure de température adjoint à un produit, un instant de début et un instant de fin d'un traitement du produit par un dispositif de traitement, et en ce que les moyens de mémorisation sont adaptés pour mémoriser lesdits instants de début et de fin dudit traitement.

Il est alors possible, pour un traitement donné d'un produit donné, de connaître quels intervalles de températures doivent être respectés pour le produit.

En outre, le système comprend des moyens d'alarme pour prévenir de l'atteinte d'une température interdite pour un produit lors du traitement ou déplacement courant, les températures autorisées d'un produit étant déterminées par la plate-forme de traitement, à partir de paramètres comprenant le produit et le traitement ou déplacement courant du produit.

Pour un produit alimentaire subissant une cuisson, une mise ou maintien en température, ou un refroidissement, il existe, par exemple une zone de températures dans laquelle les bactéries se développent rapidement, et suivant le traitement subi, la réglementation sanitaire impose que la température du produit traverse cet intervalle de températures en une durée maximale prédéterminée. En cas de dépassement de cette durée, une alarme peut être déclenchée. Une alarme peut également être déclenchée si on dépasse une haute température critique ou une basse température critique au-delà ou respectivement en deçà de laquelle le produit se dégrade anormalement, par exemple en termes de goût ou de dureté.

Dans un mode de réalisation préféré, les moyens d'alarme sont intégrés aux dispositifs de mesure de température et/ou à la plate-forme de traitement.

Avantageusement, les premiers moyens de détermination comprennent des moyens pour un identifiant de produit à un identifiant de dispositif de mesure de la température d'un produit.

Ces moyens peuvent être des moyens automatiques comme un dispositif à codes barres, ou à étiquettes électroniques, permettant d'associer un identifiant à un dispositif de mesure de température.

Par exemple, le ou les produits étant alimentaires, les dispositifs de traitement comprennent au moins un dispositif de préparation, et/ou au moins un dispositif de cuisson, et/ou au moins un dispositif de mise ou maintien en température supérieure à la température ambiante, et/ou au moins un dispositif de refroidissement, et /ou au moins un dispositif de conservation en température inférieure à la température ambiante.

D'autres buts, caractéristiques et avantages de l'invention apparaîtront à la lecture de la description suivante, donnée à titre d'exemple non limitatif, et faite en référence aux dessins annexés sur lesquels :
la figure 1 est une vue schématique d'un mode de réalisation d'un système selon un aspect de l'invention, dans le cas d'un produit alimentaire ; et
les figures 2 à 12 illustrent un exemple de fonctionnement du système avec deux produits alimentaires différents.

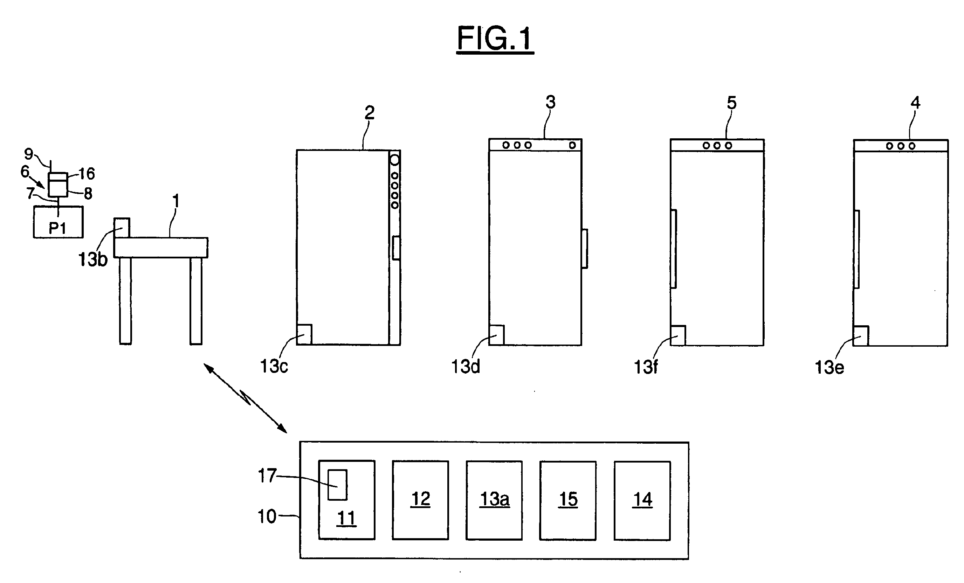

Sur la figure 1 est représenté un système de suivi automatique de l'évolution de la température d'un produit alimentaire selon l'invention. Quatre types de traitements, effectués dans des types de dispositifs respectifs 1, 2, 3, 4, et 5 sont représentés, et correspondent, dans cet exemple, à un traitement de préparation, par exemple sur une table 1, un traitement de cuisson, par exemple dans un four 2, un traitement de refroidissement rapide, par exemple dans une enceinte de refroidissement rapide 3, un traitement de mise ou maintien en température supérieure à la température ambiante, par exemple dans une enceinte de mise ou maintien en température supérieure à la température ambiante 4, et un traitement de conservation en température inférieure à la température ambiante, par exemple dans une enceinte de conservation en température inférieure à la température ambiante 5.

Le traitement de préparation est effectué sur une ou plusieurs tables 1, le traitement de cuisson est effectué dans un ou plusieurs fours 2, le traitement de refroidissement rapide ou maintien à basse température est effectué dans une ou plusieurs enceintes de refroidissement rapide 3, le traitement de mise ou maintien en température supérieure à la température ambiante est effectué dans une ou plusieurs enceintes de mise ou maintien en température supérieure à la température ambiante 4, et le traitement de conservation en température inférieure à la température ambiante est effectué dans une ou plusieurs enceintes de mise ou maintien en température inférieure à la température ambiante 5.

Dans l'exemple décrit, un seul appareil de chaque sorte est utilisé.

Lorsqu'un produit alimentaire P1, par exemple un produit frais, est reçu pour être traité, on adjoint au produit alimentaire P1 un dispositif 6 de mesure de la température du produit P1. Le dispositif 6 de mesure de la température du produit P1 comprend ici une sonde à coeur 7 afin de mesurer la température au coeur du produit alimentaire P1.

Cependant, en variante, le dispositif 6 de mesure de la température du produit P1 peut comprendre un capteur de mesure de la température de la surface du produit P1.

Le dispositif 6 de mesure de la température du produit P1 comprend un module de transmission radio 8, permettant de transmettre par ondes radio des valeurs de mesures de la température du produit P1 effectuées par le dispositif 6. Le module de transmission radio 8 est équipé d'une antenne 9.

Une unité de traitement 10 est présente pour gérer l'ensemble du fonctionnement du système. L'unité de traitement 10 comprend notamment un premier module de détermination 11, permettant de déterminer un instant d'une valeur de mesure de température.

En variante, le module de détermination 11 peut être intégré au dispositif 6 de mesure de la température du produit. Cependant, en pareil cas, le coût serait plus élevé en cas d'une pluralité de dispositifs de mesure de la température de différents produits.

Le premier module de détermination 11 est capable de reconnaître un identifiant d'un dispositif de mesure, dans le cas où le système comprend une pluralité de dispositifs de mesure de la température de différents produits. Un identifiant d'un dispositif de mesure peut, par exemple âtre un code barre d'une étiquette à code barres, ou une donnée électronique caractéristique d'une étiquette électronique, adjointe au dispositif de mesure

L'unité de traitement 10 comprend également un module d'identification 12 capable d'associer un identifiant d'un produit à un identifiant d'un dispositif de mesure de température adjoint à un produit. L'identifiant d'un produit peut, par exemple, être le nom du produit.

Le système comprend également des deuxièmes modules de détermination 13a, 13b, 13c, 13d, 13e, et 13f respectivement distribués entre l'unité de traitement 10, la table 1, le four 2, l'enceinte de refroidissement rapide 3, l'enceinte de mise ou maintien en température supérieure à la température ambiante 4, et l'enceinte de conservation en température inférieure à la température ambiante 5. En variante, si une pluralité d'un type d'appareil mettant en oeuvre un traitement est utilisée, chaque appareil comprend un deuxième module de détermination. Les deuxièmes modules de détermination 13b, 13c, 131d, 13e et 13f sont, par exemple des lecteurs d'étiquettes électroniques, par exemple de type RFID, ou de codes barres. Les échanges de données entre un lecteur et une étiquette électronique se fait par ondes radio. Un lecteur détecte une entrée ou une sortie d'une étiquette électronique du dispositif auquel il est associé. Une telle détection entraîne la transmission d'une information à l'unité de traitement 10, indiquant un identifiant de l'étiquette électronique, donc du produit associé. Cette information peut comprendre un instant de l'émission de cette information, ou un instant de réception de cette information peut être déterminé par l'unité de traitement 10. Ces informations sont mémorisées par l'unité de traitement 10, dans un module de mémorisation 14.

L'unité de traitement 10 comprend, en outre, un module d'alarme 15 permettant de prévenir, par exemple, l'atteinte d'une température inadaptée du produit lors d'un traitement, ou bien le dépassement d'une durée maximale autorisée, pour la température du produit, dans un intervalle prédéterminé de températures. Le module d'alarme 15 est, par exemple, un module d'alarme sonore et/ou visuelle.

Les deuxièmes modules de détermination 13a, 13b, 13c, 131d, 13e, et 13f permettent de déterminer dans quel appareil, c'est-à-dire dans quel traitement, ou dans quel déplacement se trouve le produit concerné. Il est ainsi possible de déterminer un intervalle de températures adapté, ou un intervalle de températures inadapté pour le produit pour ce traitement ou ce déplacement.

Le dispositif 6 de mesure de la température d'un produit peut également comprendre un module d'alarme intégré 16, par exemple sonore ou visuelle. Ce module d'alarme intégré 16 permet de situer plus rapidement un produit se trouvant dans un intervalle de températures inadapté. Le premier module de détermination 11 comprend également un module 17 pour associer un identifiant à un dispositif de mesure de la température d'un produit. L'identifiant est un identifiant correspondant à l'identifiant du dispositif de mesure. Par exemple, si le dispositif de mesure de la température d'un produit a pour identifiant "0001", transmis avec la mesure, le module 17 associe à la mesure reçue, soit le même identifiant "0001", soit un autre, par exemple "Produit1".

Le module de mémorisation 14 peut mémoriser des valeurs de mesure de la température d'un ou des produits, et les instants associés.

Les figures suivantes illustrent un exemple de fonctionnement du système avec deux produits alimentaires différents, P1 et P2.

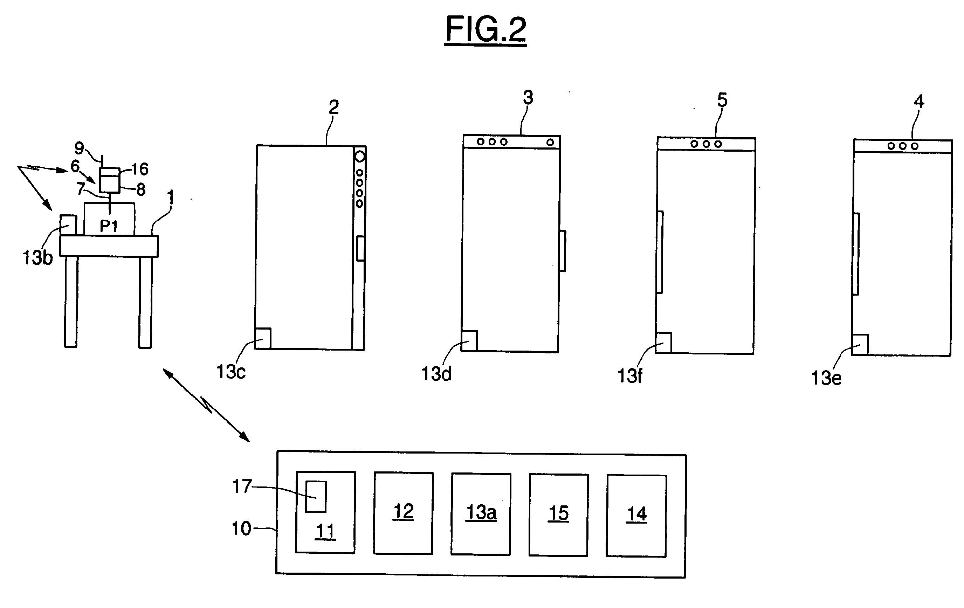

Sur la figure 2, le produit P1 subit un traitement de préparation sur la table 1. Par exemple, si le produit P1 est une pièce de viande, celle-ci peut être agrémenté d'ail, de poivre et de beurre. Dans la suite, on supposera que les dispositifs de mesure de la température d'un produit sont pourvus d'une étiquette électronique de type RFID, et que les deuxièmes modules de détermination 13b, 13c, 13d, 13e et 13f sont des lecteurs d'étiquette électroniques, capable de détecter et lire une étiquette électronique d'un dispositif de mesure arrivant sur ou entrant dans l'appareil de traitement auquel il est lié. Le lecteur 13b lié à la table 1 détecte l'entrée du dispositif 6 adjoint au produit P1 sur la table 1 de préparation et transmet l'information correspondante à l'unité de traitement 10, qui la mémorise avec l'instant associé dans le module de mémorisation 14.

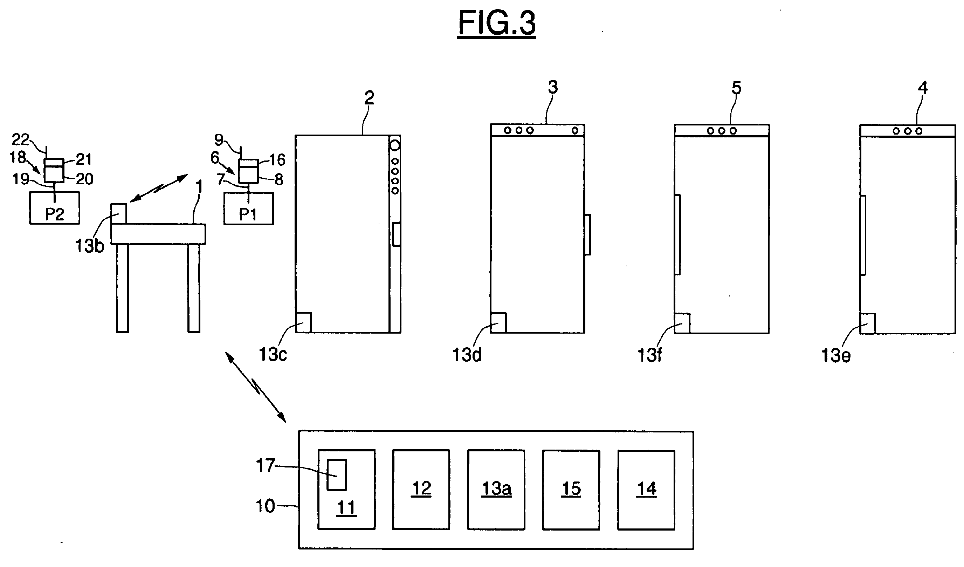

Puis, (figure 3), un autre produit alimentaire, par exemple un autre produit frais P2, est reçu également pour être traité. On adjoint un autre dispositif 18 de mesure de la température du produit P2 au produit P2. Le dispositif 18 de mesure de la température du produit P2 comprend, comme le dispositif 6, une sonde à coeur 19 pour mesurer la température au coeur du produit alimentaire P2, un module de transmission radio 20, et un module d'alarme intégré 21. Le module de transmission radio 20 est équipé d'une antenne 22.

Une fois terminée la préparation du produit alimentaire P1 sur la table 1, le produit alimentaire P1 est déplacé en direction du four de cuisson 2. Le lecteur 13b de la table 1 de préparation détermine alors un instant de fin de la préparation du produit P1 et transmet l'information correspondante à l'unité de traitement 10, qui la mémorise avec l'instant associé dans le module de mémorisation 14.

Le deuxième module de détermination 13a de l'unité de traitement 10 en est informé. Les instants de début et de fin d'un traitement déterminé sont, bien entendu, mémorisés dans le module de mémorisation 14. Le produit P1 est alors déplacé afin de pouvoir subir un traitement de cuisson dans le four 2.

Durant tous ces traitements et ces déplacements, les produits P1 et P2 gardent respectivement adjoint leur dispositif de mesure de température 6 et 18.

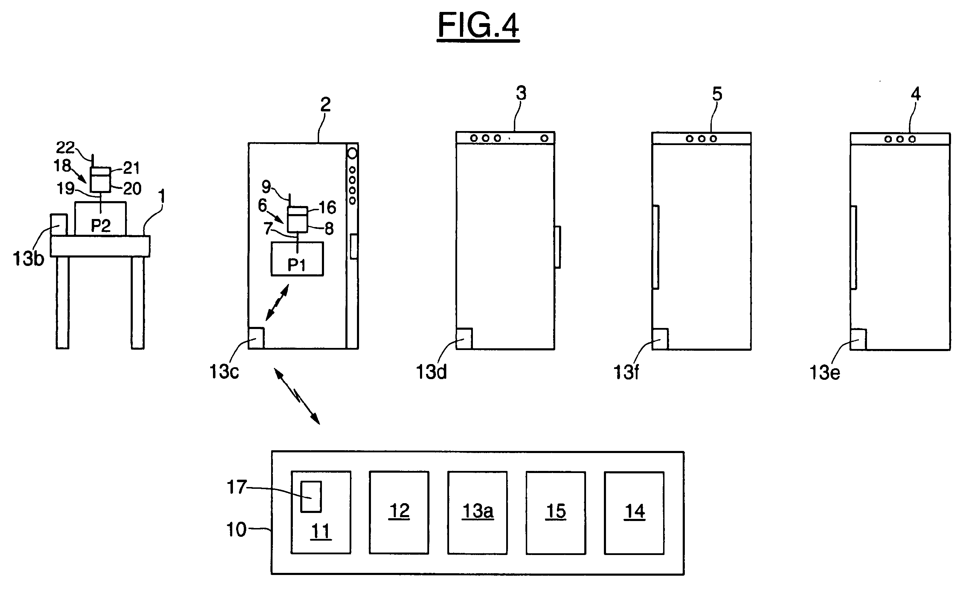

Le produit P1 (figure 4), quant à lui, passe en traitement de cuisson 2. Le deuxième module de détermination 13b détermine un instant de début et de fin du traitement de préparation 1 du produit P2 et transmet l'information correspondante à l'unité de traitement 10, qui la mémorise avec l'instant associé dans le module de mémorisation 14. Le deuxième module de détermination 13c détermine, quant à lui, un instant de début du traitement de cuisson 2 du produit P1 et transmet l'information correspondante à l'unité de traitement 10, qui la mémorise avec l'instant associé dans le module de mémorisation 14.

Tous les instants de début et de fin des traitements, subis par le produit P1 ou le produit P2, et détectés par les lecteurs 13b, 13c, 13d, 13e, ou 13f sont transmis par ondes radio, ou par câble, au deuxième module de détermination 13a et mémorisés par le module de mémorisation 14.

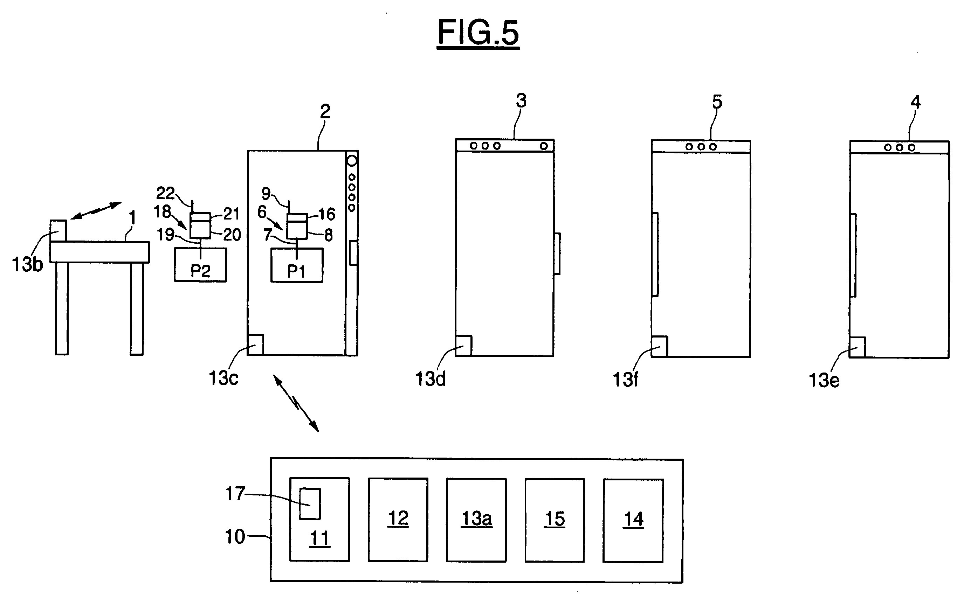

Le produit P2 (figure 5) est déplacé vers le four 2 de cuisson. Généralement, les produits P1 et P2 étant différents, chaque type de produit P1, P2 est cuit dans un four respectif. Cependant, dans l'exemple décrit, les produits P1 et P2 sont cuits dans le même four, car la température de cuisson est identique, seul leur temps de cuisson varie.

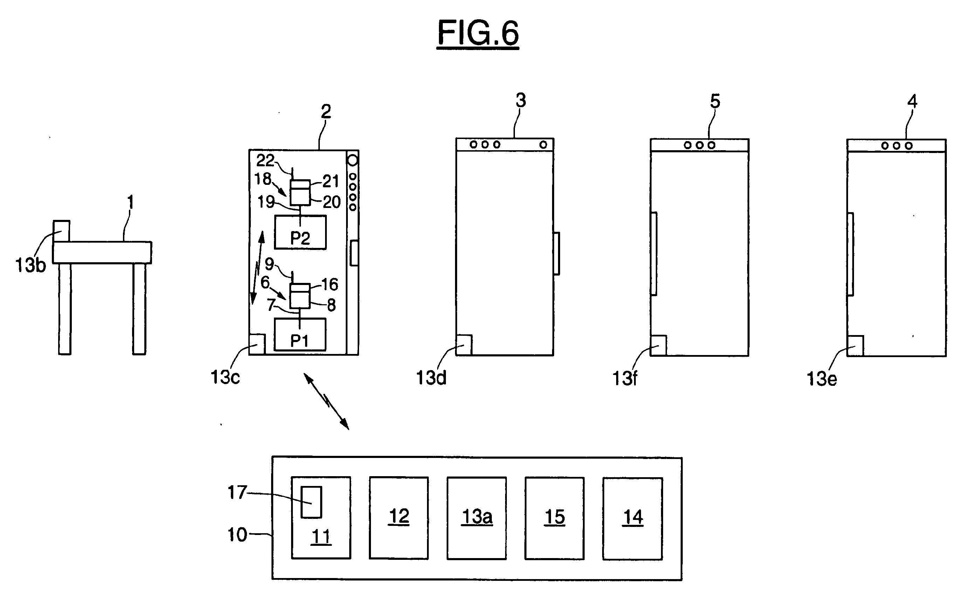

Les deux produits P1 et P2 (figure 6) cuisent alors dans le four 2. Le lecteur 13c du four 2 détecte un instant de début de traitement de cuisson du produit P2.

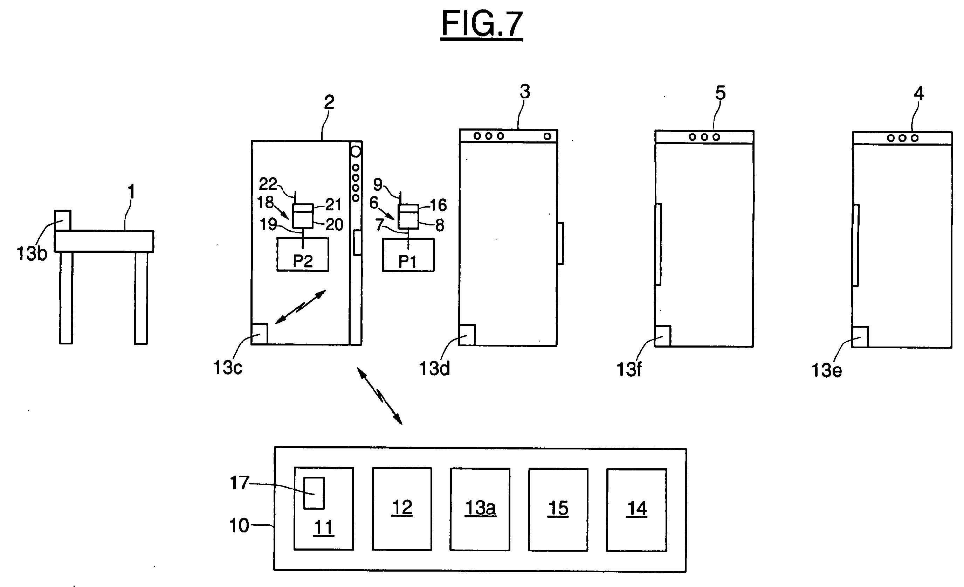

Une fois la cuisson du produit P1 finie (figure 7), le produit P1 est déplacé vers l'enceinte de refroidissement rapide 3. Le lecteur 13c du four 2 détecte un instant de fin de cuisson du produit P1 et transmet l'information correspondante à l'unité de traitement 10, qui la mémorise avec l'instant associé dans le module de mémorisation 14. Le produit P2 continue sa cuisson dans le four 2.

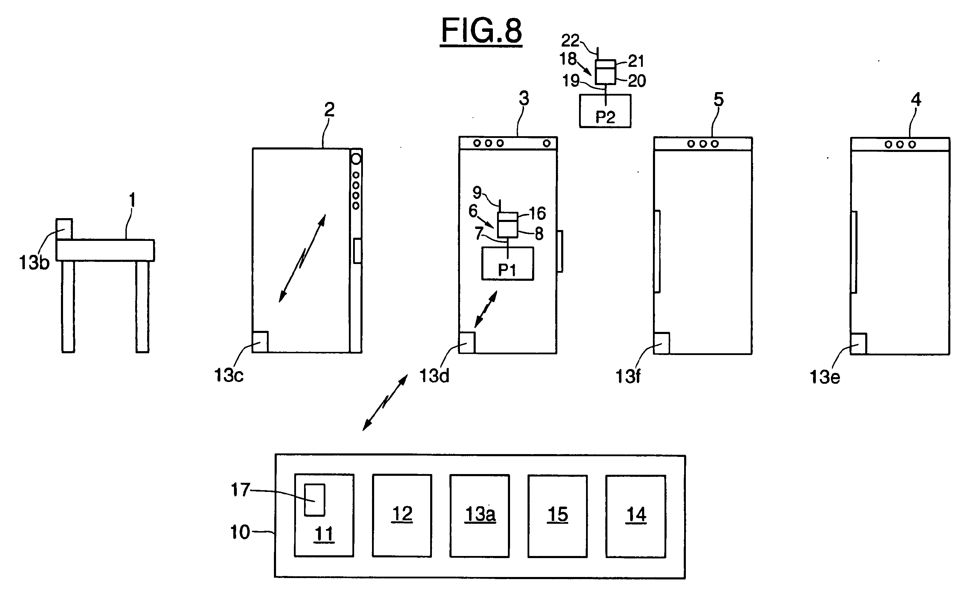

Le produit P1 (figure 8) n'est pas destiné à être servi ou consommé immédiatement. Il subit donc un traitement de refroidissement rapide dans l'enceinte de refroidissement rapide 3. Le lecteur 13d de l'enceinte de refroidissement rapide 3 détermine un instant de début de refroidissement du produit P1 et transmet l'information correspondante à l'unité de traitement 10, qui la mémorise avec l'instant associé dans le module de mémorisation 14. Une fois la cuisson du produit P2 terminée, le produit P2 est sorti du four 2 et déplacé pour subir un traitement de maintien en température supérieure à la température ambiante dans l'enceinte de mise ou maintien en température supérieure à la température ambiante 4. Le lecteur 13c du four 2 détermine un instant de fin de cuisson du produit P2 et transmet l'information correspondante à l'unité de traitement 10, qui la mémorise avec l'instant associé dans le module de mémorisation 14.

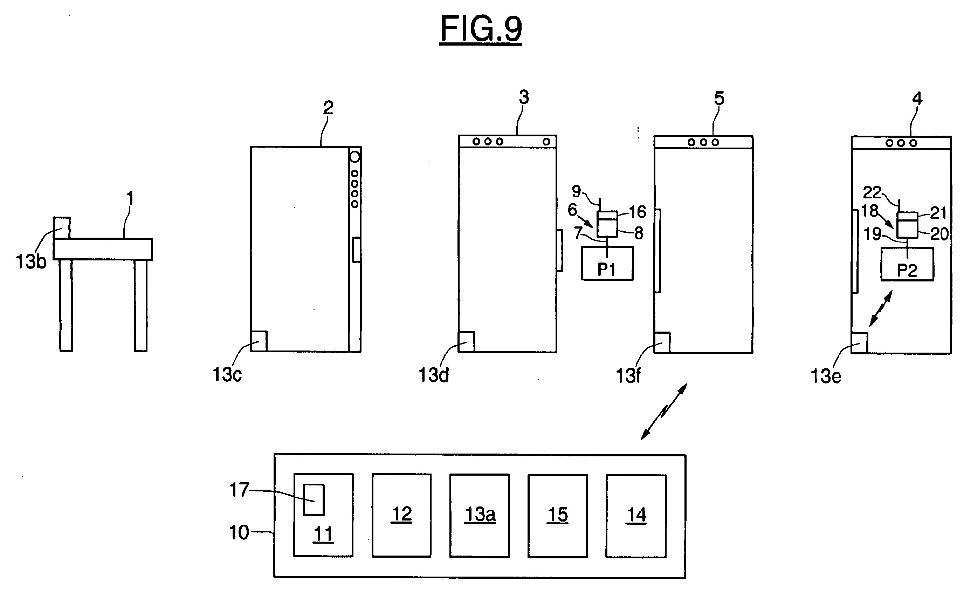

Le produit P2 (figure 9), destiné à être servi rapidement, subit alors un traitement de maintien en température supérieure à la température ambiante, dans l'enceinte de mise ou maintien en température supérieure à la température ambiante 4. Le lecteur 13e de l'enceinte de mise ou maintien en température supérieure à la température ambiante 4 détermine un instant de début et de fin de maintien en température supérieure à la température ambiante du produit P2 et transmet l'information correspondante à l'unité de traitement 10, qui la mémorise avec l'instant associé dans le module de mémorisation 14. Le produit P1 continue son refroidissement rapide et une fois celui-ci terminé, le produit P1 est sortie de l'enceinte de refroidissement rapide 3, afin d'être conservé en température inférieure à la température ambiante dans l'enceinte de conservation 5. Le lecteur 13d de l'enceinte de refroidissement rapide 3 détermine un instant de fin du refroidissement rapide 3 du produit P1 et transmet l'information correspondante à l'unité de traitement 10, qui la mémorise avec l'instant associé dans le module de mémorisation 14.

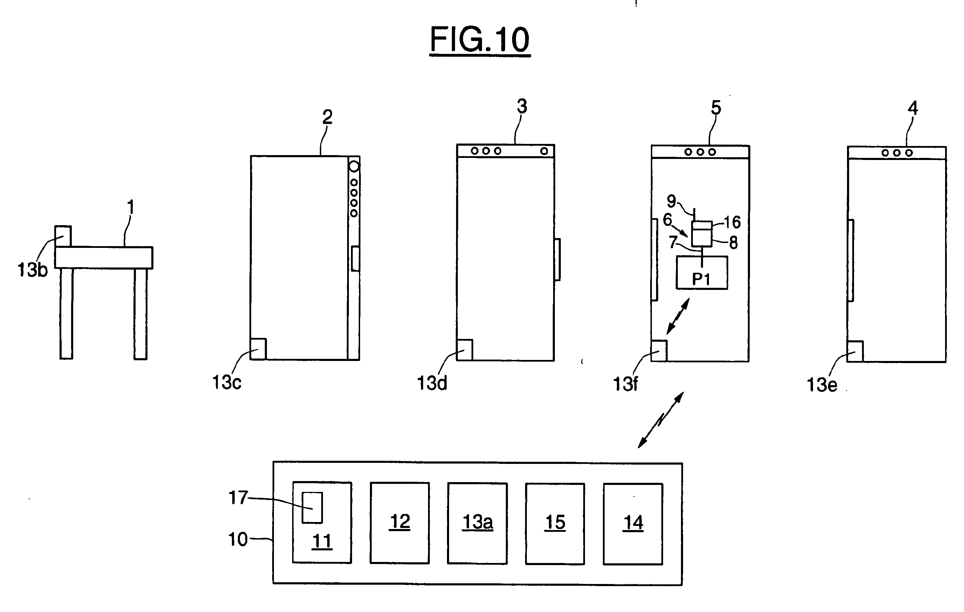

Le produit P2 (figure 10) a été servi. Le produit P1 est conservé à une température inférieure à la température ambiante dans l'enceinte de conservation en température inférieure à la température ambiante 5. Le lecteur 13f de l'enceinte de conservation 5 détermine un instant de début de conservation en température inférieure à la température ambiante du produit P1 et transmet l'information correspondante à l'unité de traitement 10, qui la mémorise avec l'instant associé dans le module de mémorisation 14.

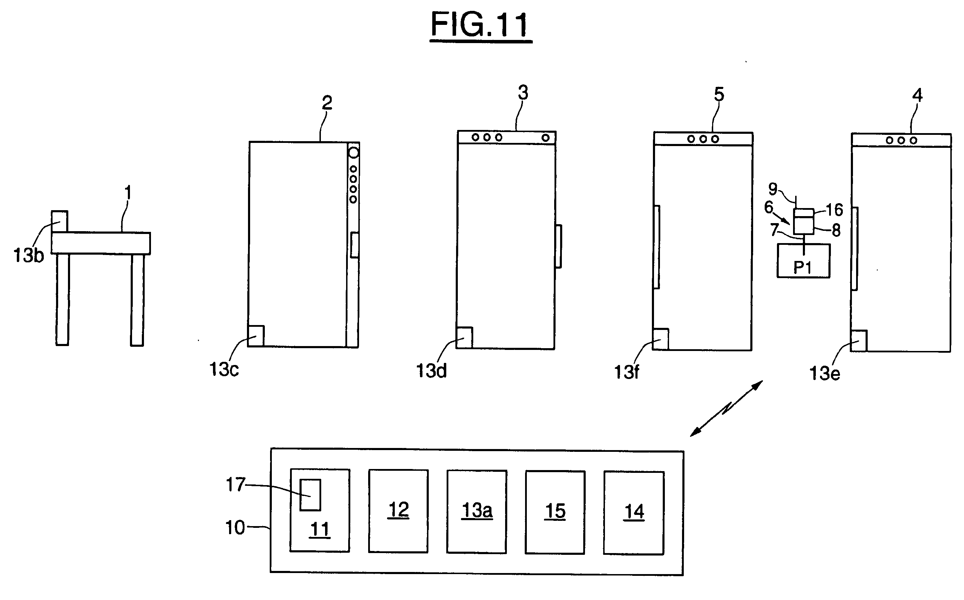

Avant de servir le produit P1 (figure 11), celui-ci est déplacé vers l'enceinte de mise ou maintien en température supérieur à la température ambiante 4. Le lecteur 13f de l'enceinte de conservation 5 détermine un instant de fin de conservation en température inférieure à la température ambiante du produit P1 et transmet l'information correspondante à l'unité de traitement 10, qui la mémorise avec l'instant associé dans le module de mémorisation 14.

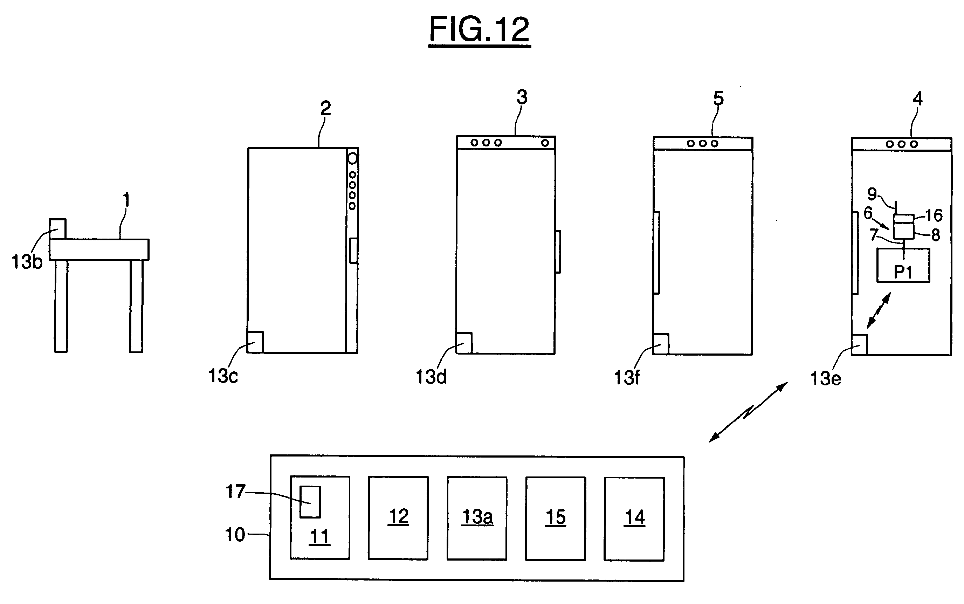

Puis (figure 12), le lecteur 13e de l'enceinte de mise ou maintien en température 4 détermine un instant de début et un instant de fin de la mise en température supérieure à la température ambiante 4 du produit P1 et transmet l'information correspondante à l'unité de traitement 10, qui la mémorise avec l'instant associé dans le module de mémorisation 14.

Le module d'identification 12 permet à tout moment, même à posteriori, d'associer un identifiant d'un produit à un identifiant d'un dispositif de mesure de température adjoint à un produit. L'identifiant d'un produit peut par exemple être le nom du produit. Par exemple, le produit P1 peut être du boeuf et le produit P2 du poulet.

Les deuxièmes modules de détermination 13a, 13b, 13c, 13d, 13e, et 13f permettent, pour un produit donné et un traitement donné, de déterminer un intervalle de température interdit au produit considéré. Durant un traitement considéré, si le produit subissant ce traitement se trouve à une température non autorisée, le module d'alarme 15 et les modules d'alarme 16 et/ou 21, intégrés aux dispositifs respectifs 6 et 18 des produits P1 et P2, sont déclenchés par l'unité de traitement 10. Les modules d'alarme 16 et 21 intégrés aux dispositifs respectifs 6 et 18 permettent de localiser rapidement les produits risquant d'être détériorés.

L'invention permet de suivre, en continu, la température de plusieurs produits, notamment alimentaires, lors de traitements et de déplacements.

L'invention permet, en outre, de prévenir l'utilisateur en cas de risques de détérioration d'un produit dus à une température inadéquate.

Dans le cas de produits alimentaires, les réglementations concernant la chaîne de sécurité alimentaire sont alors mieux respectées. On améliore également la traçabilité des produits.

## Revendications

1. Procédé de suivi automatique de l'évolution de la température d'un produit lors de traitements (1,2,3,4,5) et de déplacements du produit d'un dispositif de traitement à un autre, dans lequel :
- on adjoint au produit (P1,P2) un dispositif (6,18) de mesure de la température du produit (P1,P2) pour un ensemble d'au moins deux traitements (1,2,3,4,5) et des déplacements correspondants du produit (P1,P2) ;
- on enregistre des valeurs de mesures de la température du produit (P1,P2) transmises par ondes radio par le dispositif (6,18) de mesure de la température du produit (P1,P2) ;
- on enregistre des instants correspondant à des valeurs enregistrées de mesures de la température du produit (P1,P2) ; **caractérisé par le fait que** :
- on détermine, pour le dispositif de mesure de température adjoint au produit (P1, P2), un instant de début et un instant de fin d'un traitement (1, 2, 3, 4, 5) du produit par un dispositif de traitement, et
- on mémorise les instants de début et de fin dudit traitement.

2. Procédé selon la revendication 1, **caractérisé en ce que** les valeurs de mesures de la température du produit (P1,P2) sont délivrées par le dispositif (6,18) de mesure de la température du produit (P1,P2) sur requête ou automatiquement.

3. Procédé selon la revendication 2, **caractérisé en ce que** l'on détermine un instant d'une valeur de mesure de la température du produit (P1,P2), et **en ce que** l'on mémorise la valeur de la mesure de la température du produit (P1,P2) et ledit instant déterminé correspondant.

4. Système de suivi automatique de l'évolution de la température d'un produit (P1,P2) lors de traitements (1,2,3,4,5) et de déplacements du produit (P1,P2) d'un dispositif de traitement à un autre, comprenant un dispositif (6,18) de mesure de la température du produit (P1,P2) adjoignable au produit (P1,P2) pour un ensemble d'au moins deux traitements (1,2,3,4,5) et des déplacements correspondants du produit (P1,P2), ledit dispositif (6,18) de mesure de la température du produit comprenant des moyens de transmission radio (8,20) de valeurs de mesures de la température du produit (P1,P2), **caractérisé en ce que** le système comprend des deuxièmes moyens de détermination (13a,13b,13c,13d,13e,13f) adaptés pour déterminer, pour le dispositif (6,18) de mesure de température adjoignable au produit (P1, P2), un instant de début et un instant de fin d'un traitement (1,2,3,4,5) du produit par un dispositif de traitement, et des moyens de H mémorisation (14) qui sont adaptés pour mémoriser lesdits instants de début et de fin dudit traitement.

5. Système selon la revendication 4, **caractérisé en ce que** les moyens de transmission radio (8,20) sont adaptés pour transmettre des valeurs de mesures de la température du produit (P1,P2), de leur propre initiative, ou sur requête externe, et **en ce qu'**il comprend une plate-forme de traitement (10) des données transmises par un ou plusieurs dispositifs (6,18) de mesures de la température d'un produit respectif (P1,P2).

6. Système selon la revendication 5, **caractérisé en ce qu'**il comprend des premiers moyens de détermination (11) adaptés pour déterminer un instant d'une valeur de mesure de la température d'un produit (P1,P2), et des moyens de mémorisation (14) adaptés pour mémoriser des valeurs de mesures de la température du produit et pour mémoriser les instants respectifs des valeurs de mesures de la température du produit.

7. Système selon la revendication 6, **caractérisé en ce que**, le système comprenant une pluralité de dispositifs (6,18) de mesure de la température, respectivement adjoints à un produit, et la plate-forme de traitement (10) étant adaptée pour recevoir et traiter des valeurs de températures transmises par ladite pluralité de dispositifs (6, 18) de mesure de température, les premiers moyens de détermination (11) sont adaptés pour reconnaître en outre un identifiant du dispositif (6, 18) ayant mesuré une valeur de température d'un produit (P1,P2), et les moyens de mémorisation (14) sont adaptés pour mémoriser en outre ledit identifiant respectif du dispositif ayant mesuré une valeur de la température dudit produit.

8. Système selon la revendication 7, **caractérisé en ce qu'**il comprend des moyens d'identification (12) pour associer un identifiant d'un produit à un identifiant d'un dispositif (6,18) de mesure de température adjoint à un produit (P1,P2).

9. Système selon la revendication 8, **caractérisé en ce qu'**il comprend des moyens d'alarme (15,16,21) pour prévenir de l'atteinte d'une température interdite pour un produit (P1,P2) lors du traitement (1,2,3,4,5) ou déplacement courant, les températures autorisées d'un produit étant déterminées par la plate-forme de traitement (10), à partir de paramètres comprenant le produit (P1,P2) et le traitement (1,2,3,4,5) ou déplacement courant du produit (P1,P2).

10. Système selon la revendication 9, **caractérisé en ce que** les moyens d'alarme (15,16,21) sont intégrés aux dispositifs (6,18) de mesure de température et/ou à la plate-forme de traitement (10).

11. Système selon l'une quelconque des revendications 6 à 10, **caractérisé en ce que** les premiers moyens de détermination (11) comprennent des moyens (17) pour associer un identifiant de produit à un identifiant de dispositif de mesure de la température d'un produit.

12. Système selon l'une quelconque des revendication 4 à 11, **caractérisé en ce que**, le ou les produits étant alimentaires, les dispositifs de traitement comprennent au moins un dispositif de préparation (1), et/ou au moins un dispositif de cuisson (2), et/ou au moins un dispositif de mise ou maintien en température supérieure à la température ambiante (4), et/ou au moins un dispositif de refroidissement (3), et /ou au moins un dispositif de conservation en température inférieure à la température ambiante (5).

## Claims

1. Method for automatically tracking the change of temperature of a product during treatments (1, 2, 3, 4, 5) and movements of the product from one treatment device to another, in which:
- a device (6, 18) for measuring the temperature of the product (P1, P2) is added to the product (P1, P2) for a set of at least two treatments (1, 2, 3, 4, 5) and the corresponding movements of the product (P1, P2);
- measured values of the temperature of the product (P1, P2) transmitted by radio waves by the device (6, 18) for measuring the temperature of the product (P1, P2) are stored;
- instants corresponding to stored values of measurements of the temperature of the product (P1, P2) are stored; **characterized by** the fact that:
- for the temperature measuring device added to the product (P1, P2), a start instant and an end instant of a treatment (1, 2, 3, 4, 5) of the product by a treatment device is determined, and
- the start and end instants of said treatment are stored.

2. Method according to Claim 1, **characterized in that** the measured values of the temperature of the product (P1, P2) are delivered by the device (6, 18) for measuring the temperature of the product (P1, P2) upon request or automatically.

3. Method according to Claim 2, **characterized in that** an instant of a measured value of the temperature of the product (P1, P2) is determined, and **in that** the value of the measurement of the temperature of the product (P1, P2) and said corresponding determined instant are stored.

4. System for automatically tracking the change of temperature of the product (P1, P2) during treatments (1, 2, 3, 4, 5) and movements of the product (P1, P2) from one treatment device to another, comprising a device (6, 18) for measuring the temperature of the product (P1, P2) which can be added to the product (P1, P2) for a set of at least two treatments (1, 2, 3, 4, 5) and corresponding movements of the product (P1, P2), said device (6, 18) for measuring the temperature of the product comprising radio transmission means (8, 20) for transmitting measured values of the temperature of the product (P1, P2), **characterized in that** the system comprises second determination means (13a, 13b, 13c, 13d, 13e, 13f) suitable for determining, for the temperature measuring device (6, 18) which can be added to the product (P1, P2), a start instant and an end instant of a treatment (1, 2, 3, 4, 5) of the product by a treatment device, and storage means (14) which are suitable for storing said start and end instants of said treatment.

5. System according to Claim 4, **characterized in that** the radio transmission means (8, 20) are suitable for transmitting measured values of the temperature of the product (P1, P2), on their own initiative, or upon an external request, and **in that** it comprises a platform (10) for processing the data transmitted by one or more devices (6, 18) for measuring the temperature of a respective product (P1, P2).

6. System according to Claim 5, **characterized in that** it comprises first determination means (11) suitable for determining an instant of a measured value of the temperature of a product (P1, P2), and storage means (14) suitable for storing the measured values of the temperature of the product and for storing the respective instants of the measured values of the temperature of the product.

7. System according to Claim 6, **characterized in that**, the system comprising a plurality of temperature measuring devices (6, 18), respectively added to a product, and the processing platform (10) being suitable for receiving and processing temperature values transmitted by said plurality of temperature measuring devices (6, 18), the first determination means (11) are suitable for also recognising an identifier of the device (6, 18) having measured a temperature value of a product (P1, P2), and the storage means (14) are suitable for also storing said respective identifier of the device having measured a value of the temperature of said product.

8. System according to Claim 7, **characterized in that** it comprises identification means (12) for associating an identifier of a product with an identifier of a temperature measuring device (6, 18) added to a product (P1, P2).

9. System according to Claim 8, **characterized in that** it comprises alarm means (15, 16, 21) for warning that a temperature prohibited for a product (P1, P2) in the current treatment (1, 2, 3, 4, 5) or movement has been reached, the temperatures allowed for a product being determined by the processing platform (10), based on parameters comprising the product (P1, P2) and the current treatment (1, 2, 3, 4, 5) or movement of the product (P1, P2).

10. System according to Claim 9, **characterized in that** the alarm means (15, 16, 21) are incorporated in the temperature measuring devices (6, 18) and/or in the processing platform (10).

11. System according to any one of Claims 6 to 10, **characterized in that** the first determination means (11) comprise means (17) for associating a product identifier with an identifier of a device for measuring the temperature of a product.

12. System according to any one of Claims 4 to 11, **characterized in that**, the product or products being food products, the treatment devices comprise at least one preparation device (1), and/or at least one cooking device (2), and/or at least one device for setting or maintaining a temperature greater than the ambient temperature (4), and/or at least one cooling device (3), and/or at least one device for keeping the temperature below ambient temperature (5).

## Patentansprüche

1. Verfahren zur automatischen Verfolgung der Entwicklung der Temperatur eines Produkts bei Verarbeitungen (1, 2, 3, 4, 5) und Verschiebungen des Produkts von einer Verarbeitungsvorrichtung zu einer anderen, bei dem:
- dem Produkt (P1, P2) eine Vorrichtung (6, 18) zur Messung der Temperatur des Produkts (P1, P2) für einen Satz von mindestens zwei Verarbeitungen (1, 2, 3, 4, 5) und entsprechenden Verschiebungen des Produkts (P1, P2) beigeordnet wird;
- Werte von Messungen der Temperatur des Produkts (P1, P2) aufgezeichnet werden, die über Funkwellen von der Vorrichtung (6, 18) zur Messung der Temperatur des Produkts (P1, P2) übertragen werden;
- Zeitpunkte aufgezeichnet werden, die aufgezeichneten Werten von Messungen der Temperatur des Produkts (P1, P2) entsprechen;
**dadurch gekennzeichnet, dass**:
- für die dem Produkt (P1, P2) beigeordnete Temperaturmessvorrichtung ein Anfangszeitpunkt und ein Endzeitpunkt einer Verarbeitung (1, 2, 3, 4, 5) des Produkts durch eine Verarbeitungsvorrichtung bestimmt wird, und
- die Anfangs- und Endzeitpunkte der Verarbeitung gespeichert werden.

2. Verfahren nach Anspruch 1, **dadurch gekennzeichnet, dass** die Werte von Messungen der Temperatur des Produkts (P1, P2) durch die Vorrichtung (6, 18) zur Messung der Temperatur des Produkts (P1, P2) auf Anforderung oder automatisch geliefert werden.

3. Verfahren nach Anspruch 2, **dadurch gekennzeichnet, dass** ein Zeitpunkt eines Messwerts der Temperatur des Produkts (P1, P2) bestimmt wird, und der Messwert der Temperatur des Produkts (P1, P2) und der entsprechende bestimmte Zeitpunkt gespeichert werden.

4. System zur automatischen Verfolgung der Entwicklung der Temperatur eines Produkts (P1, P2) bei Verarbeitungen (1, 2, 3, 4, 5) und Verschiebungen des Produkts (P1, P2) von einer Verarbeitungsvorrichtung zu einer anderen, das eine dem Produkt (P1, P2) beifügbare Vorrichtung (6, 18) zur Messung der Temperatur des Produkts (P1, P2) für einen Satz von mindestens zwei Verarbeitungen (1, 2, 3, 4, 5) und entsprechenden Verschiebungen des Produkts (P1, P2) enthält, wobei die Vorrichtung (6, 18) zur Messung der Temperatur des Produkts Einrichtungen zur Funkübertragung (8, 20) von Messwerten der Temperatur des Produkts (P1, P2) enthält, **dadurch gekennzeichnet, dass** das System zweite Bestimmungseinrichtungen (13a, 13b, 13c, 13d, 13e, 13f), die geeignet sind, um für die dem Produkt (P1, P2) beifügbare Vorrichtung (6, 18) zur Messung der Temperatur einen Anfangszeitpunkt und einen Endzeitpunkt einer Verarbeitung (1, 2, 3, 4, 5) des Produkts durch eine Verarbeitungsvorrichtung zu bestimmen, und Speichereinrichtungen (14) enthält, die geeignet sind, um die Anfangs- und Endzeitpunkte der Verarbeitung zu speichern.

5. System nach Anspruch 4, **dadurch gekennzeichnet, dass** die Funkübertragungseinrichtungen (8, 20) geeignet sind, um von sich aus oder auf externe Anforderung hin Messwerte der Temperatur des Produkts (P1, P2) zu übertragen, und dass es eine Verarbeitungsplattform (10) der von einer oder mehreren Vorrichtungen (6, 18) zur Messung der Temperatur eines jeweiligen Produkts (P1, P2) übertragenen Daten enthält.

6. System nach Anspruch 5, **dadurch gekennzeichnet, dass** es erste Bestimmungseinrichtungen (11), die geeignet sind, um einen Zeitpunkt eines Messwerts der Temperatur eines Produkts (P1, P2) zu bestimmen, und Speichereinrichtungen (14) enthält, die geeignet sind, um Messwerte der Temperatur des Produkts zu speichern, und um die jeweiligen Zeitpunkte der Messwerte der Temperatur des Produkts zu speichern.

7. System nach Anspruch 6, **dadurch gekennzeichnet, dass**, wenn das System eine Vielzahl von jeweils einem Produkt beigefügten Messvorrichtungen (6, 18) der Temperatur enthält, und wenn die Verarbeitungsplattform (10) geeignet ist, um durch die Vielzahl von Vorrichtungen (6, 18) zur Temperaturmessung übertragene Temperaturwerte zu empfangen und zu verarbeiten, die ersten Bestimmungseinrichtungen (11) geeignet sind, um außerdem eine Kennung der Vorrichtung (6, 18) zu erkennen, die einen Temperaturwert eines Produkts (P1, P2) gemessen hat, und die Speichereinrichtungen (14) geeignet sind, um außerdem die jeweilige Kennung der Vorrichtung zu speichern, die einen Temperaturwert des Produkts gemessen hat.

8. System nach Anspruch 7, **dadurch gekennzeichnet, dass** es Erkennungseinrichtungen (12) enthält, um eine Kennung eines Produkts einer Kennung einer einem Produkt (P1, P2) beigefügten Vorrichtung (6, 18) zur Temperaturmessung zuzuordnen.

9. System nach Anspruch 8, **dadurch gekennzeichnet, dass** es Alarmeinrichtungen (15, 16, 21) enthält, um über das Erreichen einer für ein Produkt (P1, P2) verbotenen Temperatur bei der laufenden Verarbeitung (1, 2, 3, 4, 5) oder Verschiebung zu informieren, wobei die erlaubten Temperaturen eines Produkts von der Verarbeitungsplattform (10) ausgehend von Parametern bestimmt werden, die das Produkt (P1, P2) und die Verarbeitung (1, 2, 3, 4, 5) oder laufende Verschiebung des Produkts (P1, P2) enthalten.

10. System nach Anspruch 9, **dadurch gekennzeichnet, dass** die Alarmeinrichtungen (15, 16, 21) in die Vorrichtungen (6, 18) zur Temperaturmessung und/oder die Verarbeitungsplattform (10) integriert sind.

11. System nach einem der Ansprüche 6 bis 10, **dadurch gekennzeichnet, dass** die ersten Bestimmungseinrichtungen (11) Einrichtungen (17) enthalten, um eine Produktkennung einer Kennung einer Messvorrichtung der Temperatur eines Produkts zuzuordnen.

12. System nach einem der Ansprüche 4 bis 11, **dadurch gekennzeichnet, dass**, wenn das oder die Produkte Nahrungsmittel sind, die Verarbeitungsvorrichtungen mindestens eine Zubereitungsvorrichtung (1), und/oder mindestens eine Garvorrichtung (2), und/oder mindestens eine Vorrichtung zum Bringen oder Halten auf einer Temperatur höher als die Umgebungstemperatur (4), und/oder mindestens eine Kühlvorrichtung (3), und/oder mindestens eine Vorrichtung (5) zum Halten auf einer Temperatur unter der Umgebungstemperatur enthalten.
